# EUROPEAN PATENT SPECIFICATION

(11) **EP 1 476 700 B1**
(45) Date of publication and mention of the grant of the patent: **11.11.2009**
(21) Application number: 03706334.4
(22) Date of filing: 19.02.2003
(51) Int. Cl.: F24J 2/30

(54) **SOLARCOLLECTOR**
SONNENKOLLEKTOR
COLLECTEUR SOLAIRE

(30) Priority: 20.02.2002 DK 200200266
(43) Date of publication of application: 17.11.2004
(73) Proprietor: Skovbjerg, Erik Villum, 7400 Herning (DK)
(72) Inventor: Skovbjerg, Erik Villum, 7400 Herning (DK)
(74) Representative: Nielsen, Leif
(86) International application number: PCT/DK2003/000111
(87) International publication number: WO 2003/071196

(56) References cited:
- EP-A- 0 109 344
- US-A- 4 135 490

## Description

The present invention concerns a solar collector according to the preamble of claim 1.

From US 4,423,718 is known an evacuated solar collector, where inside the solar collector there are provided a number of longitudinal pipes containing a liquid to be heated. These pipes are fastened to two transverse pipes at each end in such a way that the enclosed gas or air is passing freely around the longitudinal pipes. By this invention is achieved that pipes and manifold are placed in a subpressure chamber whereby pipes and manifold are insulated.

By putting a solar collector under subpressure, insulation is attained, but there will be loss of efficiency by the solar collector only absorbing radiation heat. The heat loss occurring by infrared radiation is partially lost because there is very bad heat conduction in the chamber with subpressure, where there is low pressure and almost no convection flow that can conduct energy around internally of the solar collector.

DE 43 38 520 A1 discloses an evacuated solar collector, built up as a chamber constructed of two curved halves, where an underpressure in the chamber results in compressive forces on the outer side of the chamber, pressing the two halves against each other, where one of the chamber sides is formed by glass, and where the chamber contains an absorption plate to which is fastened pipes flowed through by a medium.

This solar collector will only operate efficiently where strong direct radiation occurs. With weak or diffused sunlight, the solar collector will be poorly suited for absorbing solar energy.

US 4172442 concerns a solar energy collector system having high energy collection efficiency simultaneously heats separate gas and liquid streams flowing through the collector. The gas flows in a tiered passage sunward of the liquid passage. Exposure times of gas and liquid are regulated by separate thermostatic controls. The heated gas and liquid may be used as energy input for space heating, hot water, air conditioning, etc.

It is the purpose of the invention to achieve an efficient solar collector which is particularly suited for upright mounting, where the solar collector is utilising weak diffused light optimally.

This may be achieved with a solar collector as specified in the introduction, if the solar collector may contain a second medium, where at least the front side of the panel may contain heat exchanger surfaces that can be flowed through by the second medium, where the second medium can flow around heat exchanger surfaces by convection, and where the second medium deposits power on the panel.

Hereby may be achieved that the heat exchanger surfaces can be heated by solar radiation and that heat exchanger surfaces can deposit some of the their energy in the second medium which, due to a desired convection flow, passes the heat exchanger surfaces. Depending on the temperature of the heat exchanger surfaces, the second medium absorbs from or releases power to the heat exchanger surfaces. Close to the bottom of the solar collector, a solar collector will often be coldest, and heat exchanger surfaces can absorb energy from the second medium where the heat exchanger surfaces can give off power to the panel. Absorbing energy from the second medium can result in a considerable increase in the efficiency of the solar collector.

The back side of the panel can contain heat exchanger surfaces. Hereby may be achieved that the back side of the panel, which is to be colder than the front side, can absorb the energy supplied to the heat exchanger surface on the front side of the panel. Thereby, energy may be utilised at the front side as well as the back side of the panel, and additional amplification of the efficiency of the solar collector may be attained.

The panel can be disposed behind an absorption plate where between absorption plate and panel there may be found at least one duct flowed through by the second medium, where the absorption plate on the forward facing side may contain a decoration. Hereby may be achieved that all direct solar radiation is absorbed by absorption plate, where the energy of the absorption plate is given off to the surrounding second medium which subsequently supplies power to the panel by means of the heat exchanger surfaces. Direct heat conduction from absorption plate to the panel may occur if a number of partitioning surfaces are formed in the duct formed between panel and absorption plate, where the partitioning surfaces have sufficient transverse profile in order to transmit heat. Because the absorption plate can be designed with a plane surface facing forwards, the surface may be decorated, and the solar collector may appear as a piece of art. Because the solar collector will operate with high efficiency even when mounted vertically, solar collectors may form direct part of building fronts. Front decoration can be solar collectors. In practice, other colours than black will absorb about the same power, however, the use of very light colours should be avoided. Thereby, an artist may colour solar collectors without substantial loss of efficiency.

The panel may have heat exchanger surfaces in the form of external panels having trapezoidal cross-section, where the longest side of the cross-section is common with the panel. Hereby may be achieved that closed ducts are formed at the outer sides of the panel, where convection flow can occur in the ducts. If the solar collector is raised to a large angle relative to a horizontal plane, strong convectional flow may occur in the closed ducts. Hereby, energy may be exchanged between the front side of the ducts that is impinged by the direct solar radiation, and the back side of the ducts which can be formed by the surface of the panel. Simultaneously, the second medium can flow up and out of the ducts, after which the second medium can supply further energy to the back side of the panel, where cooling will make the second medium seek towards the bottom of the solar collector.

The sides of the cross-section of the ducts can have an angle of at least 30 degrees relative to the surface of the panel. Hereby may be achieved a steep profile where the formed ducts have a large cross-sectional area with limited material consumption.

The solar collector can be disposed at an angle of at least 45 degrees relative to horizontal plane. Hereby may be achieved that the solar collector becomes more efficient as convectional flow in the second medium in the solar collector requires that the solar collector is upright, where a vertical disposition will be optimal for the convection flow, but a lesser angle may be optimal for direct incident solar radiation.

The external panels of the panel can cover 75% of the panel front side at the most. Hereby may be achieved that direct incident solar radiation can occur directly to the panel, which is heated thereby.

The solar collector may contain at least one heat exchanger that cools the second medium of the solar collector, where the heat exchanger may be flowed through by the first medium which may be heated in the heat exchanger, where the first medium from the heat exchanger may be flowing to the inlet of the panel. Hereby may be achieved that the second medium can be cooled efficiently, where the cooled medium automatically becomes heavier and will seek towards the bottom of the panel, from which the medium can be reheated, possibly by the passing of a duct, where the medium seeks towards the top of the panel. If the inlet of the heat exchanger for the second medium occurs at the top of the solar collector, the internal flow rate for the second medium in the solar collector may be substantially increased, and a further increase of the efficiency of the solar collector can be achieved.

The solar collector can contain a first panel for absorbing radiation energy and convection energy from the heated second medium, where the solar collector can contain a second panel that may be disposed behind the first panel, where the second panel contains heat conducting surfaces for absorbing convection energy from the heated second medium, where the second panel is flowed through by the first medium that also flows through the first panel, where the panels are serially connected as to flow with regard to the first medium, where the second panel has connection to an inlet for the first medium, where the second panel has connection to an outlet for the first medium. Hereby may be achieved that the second medium can supply heat to the second panel which may be colder than the first panel. Cooling of the second medium will make the medium heavier, and the internal flow of the second medium is increased, whereby the efficiency of the solar collector is increased.

In the following, the invention is described from drawings, where:
- Fig. 1: shows a possible embodiment of a solar collector seen from the front,
- Fig. 2: shows a longitudinal section through the same solar collector,
- Fig. 3: shows a transverse section of the same solar collector,
- Fig. 4: shows a longitudinal section through a first alternative embodiment of the invention,
- Fig. 5: shows a transverse section through the first alternative embodiment of the invention,
- Fig. 6: shows a longitudinal section through a second alternative embodiment of a solar collector,
- Fig. 7: shows a transverse section through the second alternative embodiment of the invention,
- Fig. 8: shows a detail of a fourth alternative embodiment of a solar collector,
- Fig. 9: shows a detail of the lower part of Fig. 7,
- Fig. 10: shows a section through a third alternative embodiment of the invention.

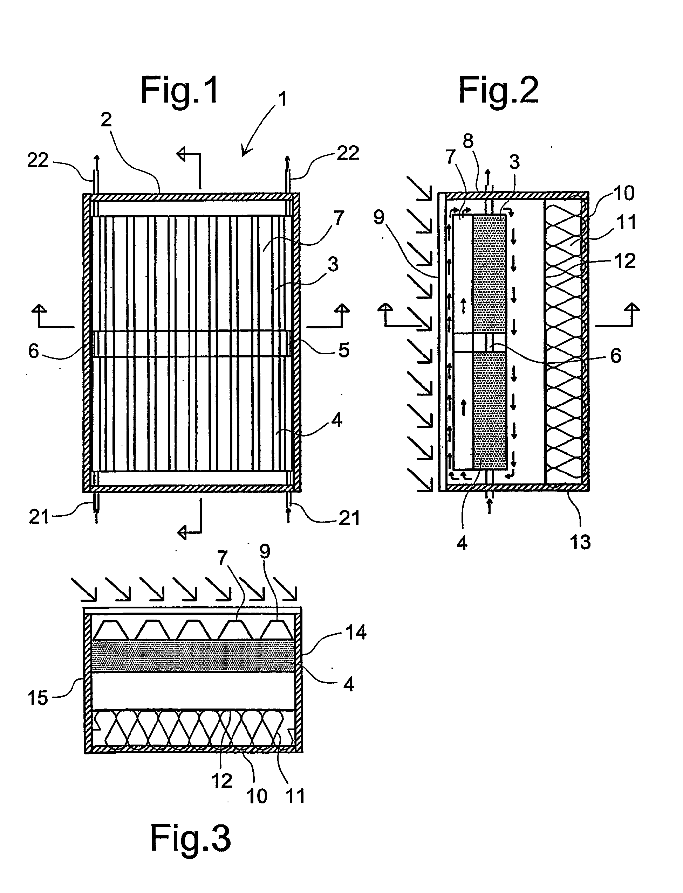

Fig. 1 shows a possible embodiment of a solar collector 1 as seen from the front where the solar collector contains a box 2 in which panels 2 and 3 are found. The panels 2 and 3 are connected by connections 5 and 6 so that panels 2 and 3 are built together, where the panels are communicating with a not shown inlet and outlet. The panels 2 and 3 contain heat exchanger surfaces in the form of ducts 7. The solar collector 1 has two inlets 21 for the first medium and has two outlets 22 for the first medium.

Fig. 2 shows a longitudinal section through the solar collector 1, where the panels 3 and 4 are found. The panels are shown with ducts 7. The solar collector 1 has a top plate 8 and a glass plate 9, where the solar collector 1 has rear plate 10 and a bottom plate 13. The solar collector 1 contains an insulation material 11, where a reflector 12 is disposed between insulation 11 and panels 3 or 4.

Fig. 3 shows a cross-section of the solar collector 1. The panel 4 with ducts 7 is shown under the glass plate 9, where the solar collector contains insulation 11 under a reflector 12, and where the solar collector has sides 14 and 15.

Solar collectors 1 shown in Figs. 1-3 operate in that sun rays pass through the glass plate 9 and impinge on the panels 3 and 4, which are thereby heated. The sun rays also impinge on the ducts 7 at the outer side of the ducts 7. The ducts 7 are heated, and the ducts 7 yield heat by radiation and by heating the ambient second medium. The second medium becomes lighter by heating, and the medium rises up under continuing heating until the second medium reaches the top of the panel. The medium will here, due to continued convection flow, be forced to the rear side of the panel, where the second medium is cooled by contact with the panel 3, whereby the second medium becomes heavier during continuous cooling, and the medium sinks down to the bottom 13 of the solar collector, where the second medium may repeat its flow. By using convection flow for energy transport, the solar collector can attain a very high efficiency, also in diffuse sun radiation with the sun standing low.

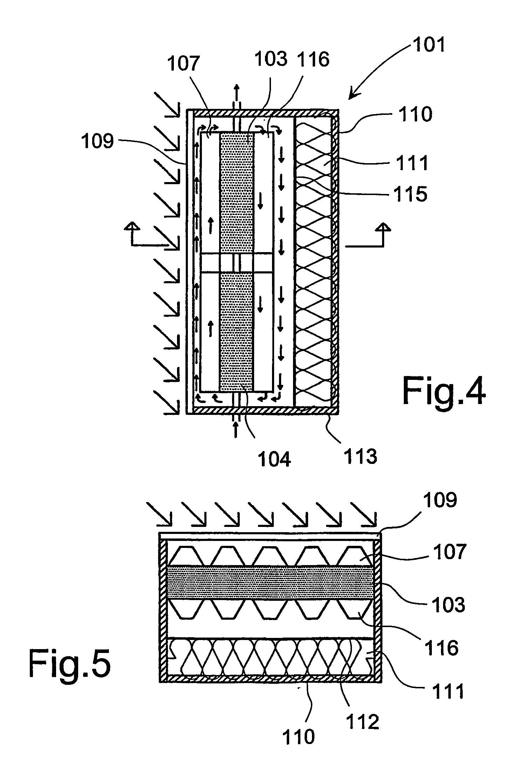

Fig. 4 shows a longitudinal section through the solar collector 101, where panels 103 and 104 are provided. The panels are shown with ducts 107. The solar collector 101 has a top plate 108 and a glass plate 109, where the solar collector 101 has a rear plate 110 and a bottom plate 113. The solar collector 101 contains an insulation material 111 where a reflector 112 is disposed between insulation 111 and panels 103 or 104. Panels 103 and 104 contain ducts 116 at their rear sides.

Fig. 5 shows a second possible embodiment of the solar collector, where Fig. 5 shows a cross-section through the solar collector 101. The panel 104 with ducts 107 are shown under the glass plate 109, where the solar collector contains insulation 111 under a reflector 112, where the solar collector has sides 114 and 115. The solar collector differs from the solar collector shown on Figs. 1 - 3 by containing ducts 116 at the rear sides of the panels 103 and 104.

Use of ducts 116 at the rear side of the panels means that the heated second medium is provided access to a far larger area that may conduct heat into the panels. Thereby, the efficiency is further increased.

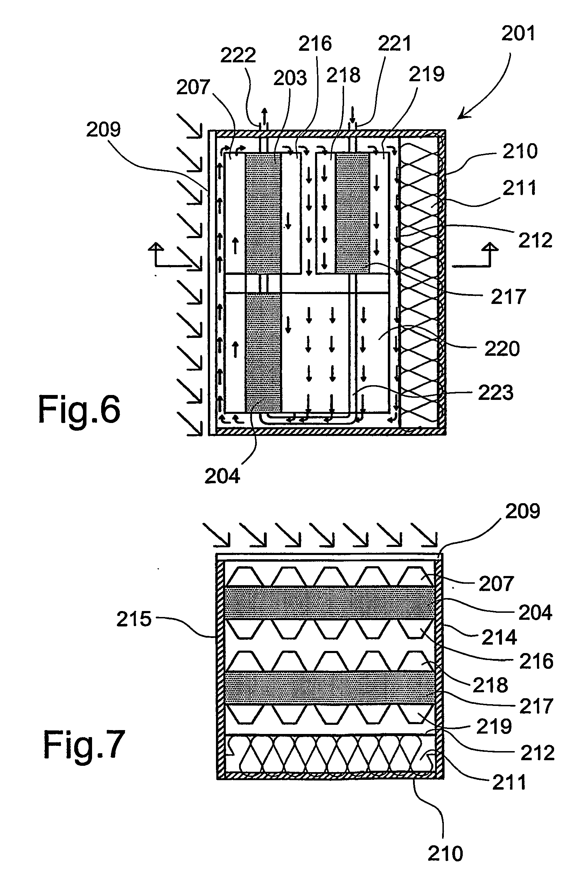

Fig. 6 shows a longitudinal section through the solar collector 201, where the panels 203 and 204 are provided. The panels are shown with ducts 207. The solar collector 201 has a top plate 208 and a glass plate 209, where the solar collector 201 has a rear plate 210 and a bottom plate 213. The solar collector 201 contains an insulation material 211 where a reflector 212 is disposed between insulation 211 and panels 203 and 204. The panels 203 and 204 contain ducts 216 at their rear sides. The solar collector contains the second panel 217 containing ducts 218 and 219, where the panel 204 contains heat conducting surfaces 220. The panel 217 is shown with a possible inlet for the first medium 211, where the panel 203 is shown with a possible outlet 222 for the first medium. An internal connection 223 for the first medium is shown between the panels 217 and 204.

Fig. 7 shows a third possible embodiment of the solar collector, where Fig. 7 shows a cross-section through the solar collector 201. The panel 204 with ducts 207 is shown under the glass plate 209, where the solar collector contains insulation 211 under a reflector 212, where the solar collector has sides 214 and 215. The solar collector contains ducts 116 at the rear sides of the panels 103 and 104. The solar collector contains a second panel 217 disposed behind the first panel 204. The second panel 217 contains ducts 218 and 219.

By flowing towards the top of the panels, the second medium, which is heated at the front side of the panels 203 and 204, will come into contact with the panel 217 that is receiving cooled first medium through inlet 221. The second medium is cooled while the first medium is heated. Due to cooling by contact with panel 217 or ducts 218 and 219, the second medium sinks down against heat conducting surfaces which are connected to the panel 204, whereby heat conduction occurs from the second medium to the panel 204.

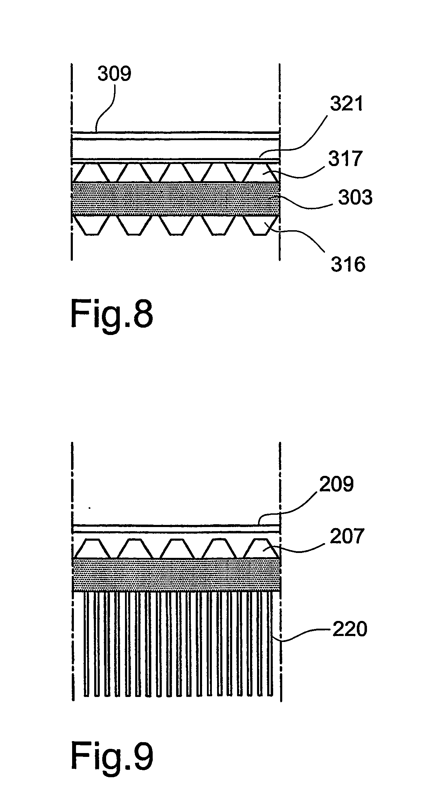

Fig. 8 shows a section through a third possible embodiment of the solar collector, where there is shown a glass plate 309 and a panel 303 which is surrounded by ducts 317 and 318, where between glass plate 309 and ducts 317 there is provided an adsorption plate 321.

Solar radiation will impinge on the plane adsorption plate 321, where the sides of the ducts 317 are conducting heat to the panel 303. The second medium will flow in and between the ducts 317 where the second medium can exchange heat with the panels as previously described.

Fig. 9 shows a detailed section through the second embodiment of the invention. A glass plate 209 lies in front of a panel 204 containing ducts 207 at the front side, where the panel 204 contains heat conducting surfaces 220 at the rear side.

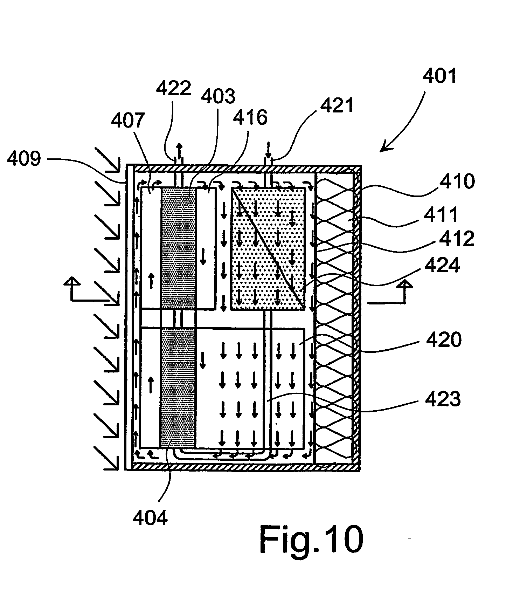

Fig. 10 shows a longitudinal section through the solar collector 401, where the panels 403 and 404 are found. The panels are shown with ducts 407. The solar collector 401 has a top plate 408 and a glass plate 409, where the solar collector 401 has a rear plate 401 and a bottom plate 413. The solar collector 401 contains an insulation material 411, where a reflector 412 is disposed between insulation 411 and panels 403 and 404. The panels 403 and 404 contain ducts 416 at their rear side. The solar collector contains a heat exchanger 424 where the panel 404 contains heat conducting surfaces 420. The heat exchanger 424 is shown with a possible inlet for the first medium 421, where the panel 403 is shown with a possible outlet 422 for the first medium. An internal connection 423 for the first medium is shown between the panels 417 and 404.

The use of heat exchanger 424 implies very effective cooling of the second medium which may leave the heat exchanger at a temperature which is only few degrees over the inlet temperature for the first medium. Hereby, the energy content in the second medium is utilised optimally, and the internal convection flow in the solar collector is considerably increased. Thereby is achieved a very high efficiency for the invention. In an alternative embodiment, the heat exchanger can be disposed outside the solar collector itself, and the second medium can be conducted through ducts back and forth to the heat exchanger.

The heat exchanger may be cooled a second medium circuit for the first medium, particularly the heat exchanger can be suited for heating tap water, where the tape water is to be further heated subsequently, which either can occur with the normal circuit of the solar collector, or with other known means for heating.

Advantageously, there may be used a pump for increasing through flow of the second medium through the heat exchanger.

A solar collector with glass and a water-filled cooling element operates by incident sun light passing through the glass without appreciable energy loss, and the light also passes through air almost without loss When the light impinges on cooling element or a rear or side wall, some of the power of the sunlight is deposited on the surface which is then heated. The heated surface emits light with considerably lower wavelength, a wavelength with only can pass the glass to a lesser extent, the glass partly acting as a mirror. Heating of the ambient air occurs simultaneously with the hot surfaces emitting light. Heated air rises, so an air flow will be initiated. Utilisation of the heated air can result in a substantial increase of the efficiency of a solar collector.

### List of reference numbers:

- 1: solar collector
- 2: box
- 3: panel
- 4: panel
- 5: connection
- 6: connection
- 7: duct
- 8: top
- 9: glass plate
- 10: rear plate
- 11: insulation
- 12: reflector
- 13: bottom plate
- 14: side plate
- 15: side plate
- 21: inlet for first medium
- 22: outlet for first medium

- 101: solar collector
- 103: panel
- 104: panel
- 107: duct
- 108: top plate
- 109: glass plate
- 110: rear plate
- 111: insulation
- 112: reflector
- 113: bottom plate
- 114: side plate
- 115: side plate
- 116: duct

- 201: solar collector
- 203: panel
- 204: panel
- 207: duct
- 208: top plate
- 209: glass plate
- 210: rear plate
- 211: insulation
- 212: reflector
- 213: bottom plate
- 214: side plate
- 215: side plate
- 216: duct
- 217: panel
- 218: duct
- 219: duct
- 220: heat conducting surface
- 221: inlet for first medium
- 222: outlet for first medium
- 223: internal connection for first medium

- 303: panel
- 309: glass plate
- 316: duct
- 317: duct
- 321: adsorption plate

- 401: solar collector
- 403: panel
- 404: panel

- 407: duct
- 408: top plate
- 409: glass plate
- 410: rear plate
- 411: insulation
- 412: reflector
- 413: bottom plate
- 414: side plate
- 415: side plate
- 416: duct
- 418: duct
- 419: duct
- 420: heat conducting surface
- 421: inlet for first medium
- 422: outlet for first medium
- 423: internal connection for first medium
- 424: heat exchanger

## Claims

1. Solar collector (1, 101, 201, 401) containing a box (2) with sides (14, 15, 214, 215) and a bottom (13), where the top of the box is formed by glass (9, 109, 209, 309, 409), where the box (2) includes at least a first panel (3, 103, 203, 204, 303, 403) for absorbing solar energy, where said at least one first panel (3, 103, 204, 203, 303, 403) has a front side and a rear side, where the front side of the at least one first panel faces the glass of the solar collector (9, 109, 209, 309, 409), where the at least one first panel (3, 103, 203, 204, 303, 403) is flowed through by a first medium, where the first medium is conducting the absorbed energy to a consumer or to an energy store, the box (2) contains a second medium, where at least the front side of the at least one first panel (3, 103, 203, 204, 303, 403) contains heat exchanger surfaces (7, 107, 207,317, 407) that are flowed through by the second medium, where the second medium flows around the at least one first panel (3, 103, 203, 204, 303, 403) by convection, where the second medium deposits power to the at least one first panel (3,103, 203, 204, 303, 403) by heat exchanging, **characterised in that** the second medium flows in a closed circuit which is delimited by the box (2).

2. Solar collector according to claim 1, **characterised in that** the rear side of the at least one first panel (3, 103, 203, 204, 303, 403) contains heat exchanger surfaces (116, 216, 316, 416).

3. Solar collector according to claim 1 or 2, **characterised in that** the at least one first panel (3, 103, 203, 303, 403) is disposed behind an absorption plate (321), where between absorption plate and at least one first panel there are provided said heat exchanger surfaces in the forum of at least one duct (317) which is flowed through by the second medium, where the absorption plate (321) on the forwards facing side contains decorations.

4. Solar collector according to any of claims 1 - 3, **characterised in that** the at least one first panel (3, 103, 203, 303, 403) has heat exchanger surfaces in the shape of external panels (7, 107, 207, 317, 407) with a trapezoidal cross-section, where the longest side of the cross-section is common with the at least one first panel (3, 103, 203, 303, 403).

5. Solar collector according to claim 3, **characterised in that** the sides of the cross-section of the at least one duct (7, 107, 207, 317, 407) are disposed at an angle of at least 30 degrees relative to the surface of the at least one first panel (3, 103, 203, 303, 403).

6. Solar collector according to any of claims 1 - 5, **characterised in that** the solar collector (1, 101, 201, 401) is disposed at an angle of at least 45 degrees relative to a horizontal plane.

7. Solar collector according to claim 4, **characterised in that** the external panels (7, 107, 207, 317, 407) of the at least one first panel cover at the most 75% of the front side of the panel.

8. Solar collector according to any of claims 1 - 7, **characterised in that** the solar collector (1, 101, 201, 401) contains at least one heat exchanger (424) cooling the second medium of the solar collector, where the heat exchanger is flowed through by the first medium which is heated in the heat exchanger (424), where the first medium from the heat exchanger (424) is flowing to the inlet of the at least one first panel.

9. Solar collector according to any of claims 1 - 8, **characterised in that** the solar collector (1, 101, 201, 401) contains said at least one first panel (3, 103, 203, 303, 403) for absorbing radiation energy and convection energy from the heated second medium, where the solar collector (1, 101, 201, 401) contains a second panel (217) disposed behind the at least one first panel (3, 103, 203, 303, 403), where the second panel (217) contains heat conducting surfaces (218, 219) for absorbing convection energy from the heated second medium, where the second panel (217) is flowed through by the first medium that also flows through the at least one first panel (3, 103, 203, 303, 403), where the panels (203+217) are serially connected as to flow with regard to the first medium, where the second panel (217) has connection to an inlet (221) for the first medium, where the at least one first panel (203) has connection to an outlet (222) for the first medium.

## Patentansprüche

1. Sonnenwärmekollektor (1, 101, 201, 401) mit einem Seitenwände (14, 15, 214, 215) und einem Boden (13) aufweisenden Kasten (2), wobei das obere Ende des Kastens aus Glas (9, 109, 209, 309, 409) geformt ist, wobei der Kasten (2) eine erste Tafel (3, 103, 203, 204, 303, 403) zur Absorption von Sonnenenergie aufweist, wobei die wenigstens eine erste Tafel (3, 103, 204, 203, 303, 403) eine Vorderseite und eine Hinterseite aufweist, wo die Vorderseite der wenigstens einen ersten Tafel gegen das Glas des Sonnenwärmekollektors (9, 109, 209, 309, 409) gerichtet ist, wobei die wenigstens eine erste Tafel (3, 103, 203, 204, 303, 403) von einem ersten Medium durchströmt wird, wobei das erste Medium die absorbierte Energie an einen Verbraucher oder einen Energiespeicher weiterleitet, der Kasten (2) enthält ein zweites Medium, wo wenigstens die Vorderseite der wenigstens einen ersten Tafel (3, 103, 203, 204, 303, 403) Wärmetauscherflächen (7, 107, 207, 317, 407) aufweist, die von dem zweiten Medium durchströmt werden, wobei das zweite Medium durch Konvektion die wenigstens erste Tafel (3, 103, 203, 204, 303, 403) umströmt, wo das zweite Medium durch Wärmeaustausch der wenigstens einen Tafel (3, 103, 203, 204, 303, 403) Energie erteilt, **dadurch gekennzeichnet, dass** das zweite Medium in einem von den Kasten (2) abgegrenzten geschlossenen Kreislauf strömt.

2. Sonnenwärmekollektor nach Anspruch 1, **dadurch gekennzeichnet, dass** die Hinterseite der wenigstens einen ersten Tafel (3, 103, 203, 204, 303, 403) Wärmetauscherflächen (116, 216, 316, 416) aufweist.

3. Sonnenwärmekollektor nach Anspruch 1 oder 2, **dadurch gekennzeichnet, dass** die wenigstens eine erste Tafel (3, 103, 203, 303, 403) hinter einer Absorptionsplatte (321) angeordnet ist, wobei die Wärmetauscherflächen in der Form von wenigstens einem von dem zweiten Medium durchströmten Kanal (317) zwischen der Absorptionsplatte und der wenigstens einen ersten Tafel angeordnet sind, wobei die Absorptionsplatte (321) auf der nach vom weisenden Seite Dekorierungen aufweist.

4. Sonnenwärmekollektor nach einem der Ansprüche 1-3, **dadurch gekennzeichnet, dass** die wenigstens eine erste Tafel (3, 103, 203, 303, 403) Wärmetauscherflächen in der Form von mit einem trapezförmigen Querschnitt versehenen äusseren Tafeln (7, 107, 207, 17, 407) aufweist, wobei die längste Seite des Querschnitts gemeinsam mit der wenigstens einen ersten Tafel (3, 103, 203, 303, 403) ist.

5. Sonnenwärmekollektor nach Anspruch 3, **dadurch gekennzeichnet, dass** die Seitenwände des Querschnitts des wenigstens einen Kanals (7, 107, 207, 317, 407) in einem Winkel von wenigstens 30° mit der Oberfläche der wenigstens einen ersten Tafel (3, 103, 203, 303, 403) angeordnet sind.

6. Sonnenwärmekollektor nach einem der Ansprüche 1-5, **dadurch gekennzeichnet, dass** der Sonnenwärmekollektor (1, 101, 201, 401) in einem Winkel von wenigstens 45° zu einem Waagerechten angeordnet ist.

7. Sonnenwärmekollektor nach Anspruch 4, **dadurch gekennzeichnet, dass** die äusseren Tafel (7, 107, 207, 317, 407) der wenigstens einen ersten Tafel höchstens 75% der Vorderseite der Tafel decken.

8. Sonnenwärmekollektor nach einem der Ansprüche 1-7, **dadurch gekennzeichnet, dass** der Sonnenwärmekollektor (1, 101, 201, 401) wenigstens einen das zweite Medium des Sonnenwärmekollektors abkühlenden Wärmetauscher (424) umfasst, wobei der Wärmetauscher von dem in dem Wärmetauscher (424) erwärmten ersten Medium durchströmt wird, wobei das erste Medium von dem Wärmetauscher (424) zu dem Einlass der wenigstens einen ersten Tafel strömt.

9. Sonnenwärmekollektor nach einem der Ansprüche 1-8, **dadurch gekennzeichnet, dass** der Sonnenwärmekollektor (1, 101, 201, 401) die wenigstens eine erste Tafel (3, 103, 203, 303, 403) für die Absorption von Strahlungsenergie und Konvektionsenergie von dem erwärmten zweiten Medium umfasst, wobei der Sonnenwärmekollektor (1, 101, 201, 401) eine hinter der wenigstens einen ersten Tafel (3, 103, 203, 303, 403) angeordnete zweite Tafel (217) aufweist, wobei die zweite Tafel (217) wärmeleitende Flächen (218, 219) für die Absorption von Konvektionsenergie von dem erwärmten zweiten Medium umfasst, wobei die zweite Tafel (217) durch das durch die wenigstens eine erste Tafel (3, 103, 203, 303, 403) durchströmende erste Medium durchströmt wird, wobei die Tafel (203, 217) betreffend das erste Medium strömungsmässig hintereinandergeschaltet sind, wobei die zweite Tafel (217) eine Verbindung mit einem Einlass (221) für das erste Medium aufweist, wo die wenigstens eine erste Tafel (203) eine Verbindung mit dem Auslass (222) für das erste Medium aufweist.

## Revendications

1. Collecteur solaire (1, 101, 201, 401) comprenant une boîte (2) avec des faces (14, 15, 214, 215) et un fond (13), le dessus de la boîte étant formé par le verre (9, 109, 209, 309, 409), la boîte (2) comprenant au moins un premier panneau (3, 103, 203, 204, 303, 403) destiné à absorber l'énergie solaire, ledit au moins un premier panneau (3, 103, 203, 204, 303, 403) ayant une face avant et une face arrière, la face avant de l'au moins un premier panneau faisant face au verre du collecteur solaire (9, 109, 209, 309, 409), l'au moins un premier panneau (3, 103, 203, 204, 303, 403) étant parcouru par un premier moyen, le premier moyen conduisant l'énergie absorbée vers un consommateur ou un dispositif de stockage d'énergie, la boîte (2) contenant un second moyen, au moins la face avant de l'au moins un premier panneau (3, 103, 203, 204, 303, 403) contenant des surfaces des échangeurs de chaleur (7, 107, 207, 317, 407) parcourues par le second moyen, le second moyen coulant autour de l'au moins un premier panneau (3, 103, 203, 204, 303, 403) par convection, le second moyen dépose de la puissance sur l'au moins un premier panneau (3, 103, 203, 204, 303, 403) par un échange de chaleur, **caractérisé en ce que** le second moyen parcourt un circuit fermé délimité par la boîte (2).

2. Collecteur solaire selon la revendication 1, **caractérisé en ce que** la face arrière de l'au moins un premier panneau (3, 103, 203, 204, 303, 403) comprend des surfaces des échangeurs de chaleur (116, 216, 316, 416).

3. Collecteur solaire selon la revendication 1 ou 2, **caractérisé en ce que** l'au moins un premier panneau (3, 103, 203, 204, 303, 403) est disposé derrière une plaque d'apsorption (321), lesdites surfaces des échangeurs de chaleur en forme d'au moins un conduit (317) parcouru par un second moyen étant prévues entre la plaque d'absorption et au moins un premier panneau, la plaque d'absorption (321) sur la face faisant face à l'avant comprend des décorations.

4. Collecteur solaire selon l'une quelconque des revendications 1-3, **caractérisé en ce que** l'au moins un premier panneau (3, 103, 203, 303, 403) comprend des surfaces des échangeurs de chaleur en forme de panneaux externes (7, 107, 207, 317, 407) à section transversale trapézoïdale, le côté le plus long de la section transversale est en commun avec l'au moins un premier panneau (3, 103, 203, 303, 403).

5. Collecteur solaire selon la revendication 3, **caractérisé en ce que** les côtés de la section transversale de l'au moins un conduit (7, 107, 207, 317, 407) sont disposés dans un angle d'au moins 30 degrés par rapport à la surface de l'au moins un premier panneau (3, 103, 203, 303, 403).

6. Collecteur solaire selon l'une quelconque des revendications 1-5, **caractérisée en ce que** le collecteur solaire (1, 101, 201, 401) est disposé dans un angle d'au moins 45 degrés par rapport au plan horizontal.

7. Collecteur solaire selon la revendication 4, **caractérisé en ce que** les panneaux externes (7, 107, 207, 317, 407) de l'au moins un premier panneau couvrent au maximum 75% de la face avant du panneau.

8. Collecteur solaire selon l'une quelconque des revendications 1-7, **caractérisé en ce que** le collecteur solaire (1, 101, 201, 401) comprend au moins un échangeur de chaleur (424) refroidissant le second moyen du collecteur solaire, l'échangeur de chaleur est parcouru par le premier moyen lequel est chauffé dans l'échangeur de chaleur (424), le premier moyen de l'échangeur de chaleur (424) passe à l'entrée de l'au moins un premier panneau.

9. Collecteur solaire selon l'une quelconque des revendications 1-8, **caractérisé en ce que** le collecteur solaire (1, 101, 201, 401) comprend ledit au moins un premier panneau (3, 103, 203, 303, 403) déstiné à absorber l'énergie de rayonnement et l'énergie de convection du second moyen chauffé, le collecteur solaire (1, 101, 201, 401) comprenant un second panneau (217) disposé derrière l'au moins un premier panneau (3, 103, 203, 303, 403), le second panneau (217) comprenant des surfaces conductrices de chaleur (218, 219) déstinées à absorber l'énergie de convection du second moyen chauffé, le second panneau (217) étant parcouru par le premier moyen parcourant aussi l'au moins un premier panneau (3, 103, 203, 303, 403), les panneaux (203, 217) étant connectés en série afin de parcourir par rapport au premier moyen, le second panneau (217) étant connecté à une entrée (221) du premier moyen, l'au moins un premier panneau (203) étant connecté à une sortie (222) pour le premier moyen.
